# EUROPEAN PATENT APPLICATION

(11) **EP 4 040 264 A1**
(43) Date of publication of application: **10.08.2022**
(21) Application number: 21820886.6
(22) Date of filing: 20.05.2021
(51) Int. Cl.: G06F 1/18

(54) **CHASSIS MODULE**

(30) Priority: 09.06.2020 CN 202010517526
(71) Applicant: ZTE Corporation, Shenzhen, Guangdong 518057 (CN)
(72) Inventor: XU, Chaoxing, Shenzhen, Guangdong 518057 (CN); WANG, Zhenqi, Shenzhen, Guangdong 518057 (CN); XU, Yanhui, Shenzhen, Guangdong 518057 (CN); MA, Xiaoyong, Shenzhen, Guangdong 518057 (CN); ZHAI, Shixuan, Shenzhen, Guangdong 518057 (CN)
(74) Representative: Petraz, Gilberto Luigi
(86) International application number: PCT/CN2021/094981
(87) International publication number: WO 2021/249155

(57) **Abstract**

The present application discloses a chassis module, comprising a chassis and a plurality of first expansion card modules within the chassis. The first expansion card module comprises a first riser card having a plurality of slots and first expansion cards inserted into the first riser card by means of the slots, the plurality of slots being sequentially arranged along the width direction of the first expansion card; the first expansion card comprises a main body part having gold fingers and inserted into the slots along the height direction, and an extension part extending along the length direction from a main body part side edge, and the edge of the first expansion card being provided with a notch extending along two dimensions of the length direction and the height direction; and the first expansion card modules are provided in pairs and arranged adjacent to each other along the length direction, and the extension part of any one of the first expansion cards extends into a notch of the other first expansion card.

## Description

### Cross Reference to Related Applications

The present application is filed on the basis of a Chinese patent application with the application number 202010517526.2, filed on June 9, 2020, and claims the priority of the Chinese patent application, which is incorporated herein by reference in its entirety.

### Field of the Invention

Embodiments of the present application relate to the field of communication devices, and in particular to a chassis module.

### Background of the Invention

Now with the rise of the applications such as artificial intelligence and intellectualization, it is necessary to configure an expansion card in a server in order to improve the performance of the server, such as data processing capability and data storage capacity. There are many types of expansion cards for improving the performance of the server, for example, a graphics processing unit (GPU) card, which is designed specially for complex mathematic and geometric calculations that are necessary to execute graphics rendering. The configuration of a GPU card in a server may improve the graphic data processing capacity of the server. Another example is a non-volatile memory express (NVMe) storage expansion card. Configuring the NVMe storage expansion card in the server can improve the data storage capacity of the server. All these expansion cards need to be connected to a main board of the server via a peripheral component interconnect express (PCIe, which is a high-speed serial computer expansion bus standard) expansion slot.

However, since the width of a standard server chassis is limited to 19 inches, the number of expansion cards that can be configured within the same chassis is limited, which cannot satisfy the increasing calculation requirements for the server.

### Summary of the Invention

The objective of the embodiments of the application is to provide a chassis module, so that more expansion cards can be configured within a standard server chassis.

The embodiments of the application provide a chassis module, including a chassis and a plurality of first expansion card modules within the chassis. The first expansion card module includes a first riser card having a plurality of slots, and first expansion cards inserted into the first riser card by means of the slots, the plurality of slots of the first riser card being sequentially arranged along the width direction of the first expansion card; the first expansion card has an overall-height along the height direction, the first expansion card includes a main body part having gold fingers and inserted into the slots along the height direction, and an extension part extending along the length direction from a main body part side edge, and an edge of the first expansion card is provided with a notch extending along two dimensions of the length direction and the height direction; and the plurality of first expansion card modules are provided in pairs, and the two first expansion card modules in a pair are arranged opposite to each other, two first expansion cards of each pair of first expansion card modules are arranged adjacent to each other along the length direction, and the extension part of any one of the first expansion cards extends into the notch of the other first expansion card.

### Brief Description of the Drawings

Fig.1 is a structural schematic diagram of a chassis module according to a first embodiment of the application;
Fig. 2 is a structural schematic diagram of a chassis module according to a second embodiment of the application;
Fig. 3 is a structural schematic diagram of a chassis module according to a third embodiment of the application;
Fig.4 is a structural schematic diagram of a chassis module according to a fourth embodiment of the application;
Fig. 5 is a front view of a chassis module according to the fourth embodiment of the application;
Fig. 6 is a structural schematic diagram of a chassis module according to the fourth embodiment of the application;
Fig.7 is a structural schematic diagram of a first riser card according to the fourth embodiment of the application; and
Fig.8 is a structural schematic diagram of a second riser card according to the fourth embodiment of the application.

### Detailed Description of the Embodiments

In order to make the objectives, technical solutions and advantages of the application clearer, various embodiments of the application are further illustrated in details below in conjunction with the accompanying drawings. However, those of ordinary skills in the art may understand that many technical details are provided in the various embodiments of the application in order to enable a reader to better understand the application. However, the technical solutions claimed by the application can also be realized even without these technical details and various changes and modifications based on the following embodiments. The division of the following embodiments is to facilitate description, and should not constitute any limitation to the specific implementation of the application, and the embodiments can be combined with each other and refer to each other when there is no contradiction.

It should be noted that, when one assembly is considered to be "connected to" another assembly, the assembly can be directly connected to the another assembly or there can be an intermediate assembly at the same time; and when one assembly is considered to be "provided on" another assembly, the assembly can be directly provided on the another assembly or there can be an intermediate assembly at the same time. The terms of "width direction", "height direction", "side edge" and "edge" used herein and similar expressions are merely for illustration.

Unless otherwise defined, all technological and scientific terms used herein have the same meanings as commonly understood by those of ordinary skill in the art of the application. Herein, the terms used in the description are merely for the purpose of describing particular embodiments, but are not intended to limit the application.

The first embodiment of the application relates to a chassis module, including a chassis and a plurality of first expansion card modules provided within the chassis. The first expansion card module includes a first riser card having a plurality of slots, and first expansion cards inserted into the first riser card by means of the slots, the plurality of slots oft the first riser card being sequentially arranged along the width direction of the first expansion card; the first expansion card has an overall-height in the height direction, the first expansion card includes a main body part having gold fingers and inserted into the slots along the height direction, and an extension part extending along the length direction from a side edge of the main body part, and an edge of the first expansion card is provided with notches extending along the two dimensions of the length direction and the height direction; and the plurality of first expansion card modules are provided in pairs and arranged opposite to each other, two first expansion cards of each pair of first expansion card modules are arranged adjacent to each other along the length direction, and the extension part of any one of the first expansion cards extends into the notch of another first expansion card.

In the embodiment, the chassis is internally provided with the plurality of first expansion card modules. The first expansion card module includes a first riser card having a plurality of slots, and first expansion cards inserted into the first riser card by means of the slots, the plurality of slots of the first riser card being sequentially arranged along the width direction of the first expansion card; the first expansion card has a double-width along the width direction and has an overall-height along the height direction of the first expansion card that is perpendicular to the width direction, the first expansion card includes a main body part having gold fingers and inserted into the slots along the height direction, and an extension part extending along the length direction, which is perpendicular to the length direction and the width direction, from a side edge of the main body part; and the plurality of first expansion card modules are provided in pairs and arranged opposite to each other, first expansion cards of each pair of first expansion card modules are arranged adjacent to each other along the length direction, an edge of each of the first expansion cards is provided with notches extending along the two dimensions of the length direction and the height direction, and the extension part of one of each pair of first expansion cards extends into the notch of the other one. In the way that a notch and an extension part of two expansion cards are complementary, spaces occupied along the length direction and along the height direction by the two expansion cards after being combined together are reduced, and thus a standard server chassis can be configured with more expansion cards.

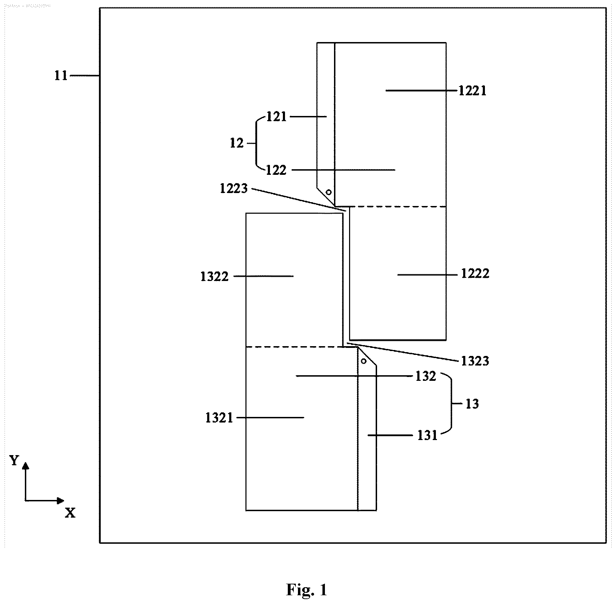

With reference to Fig. 1, the chassis module in the embodiment includes: a chassis 11, a first expansion card module 12 and a first expansion card module 13. The first expansion card module 12 is provided within the chassis and includes a first riser card 121 and a first expansion card 122. The first expansion card 122 includes a main body part 1221, an extension part 1222 and a notch 1223. The first expansion card module 13 is arranged opposite to the first expansion card module 12 and includes a first riser card 131 and a first expansion card 132. The first expansion card 132 includes a main body part 1321, an extension part 1322 and a notch 1323. The chassis module involved in the embodiment of the application will be described in details below in conjunction with the accompanying drawings.

In the embodiment, the first expansion card module 12 includes the first expansion card 122 and the first riser card 121. The first expansion card 122 includes the main body part 1221 having gold fingers and inserted along the height direction (direction X shown in the figure) into the slots of the first riser card 121. The first expansion card 122 further includes the extension part 1222 extending along the length direction (direction Y shown in the figure), which is perpendicular to the height direction and the width direction (perpendicular to the plane direction of the paper shown in Fig. 1), from a side edge of the main body part. An edge of each of the first expansion cards is provided with the notch 1223 extending in the two dimensions of the length direction and the height direction. Along the height direction, the main body part 1221 has a main body part top edge that is away from the gold fingers. Along the height direction, the extension part 1222 has an extension part top edge that is flush with the main body part top edge, and an extension part bottom edge that is arranged opposite to the extension part top edge and connected to a main body part side edge. The height size of the extension part 1222 along the height direction is smaller than the size of the main body part 1221. The main body part side edge and the extension part bottom edge are connected to each other and together enclose the notch 1223.

Furthermore, the structure of the first expansion card module 13 is the same as the structure of the first expansion card module 12. In addition, the first expansion card module 13 and the first expansion card module 12 are arranged opposite to each other, the first expansion card 122 and the first expansion card 132 are arranged adjacent to each other along the length direction, the extension part 1222 of the first expansion card 122 extends into the notch 1323 of the first expansion card 132, and the extension part 1322 of the first expansion card 132 extends into the notch 1223 of the first expansion card 122.

In an actual application scenario, both the first riser card 121 and the first riser card 131 needs to be connected to a main board inside the chassis, and the connection method can be providing gold fingers on the first riser card 121 or the first riser card 131 and inserting the gold fingers into slots in the main board, or connecting the first riser card 121 or the first riser card 131 to the main board via a cable and a connector.

It should be noted that the embodiment provides an arrangement method of a pair of expansion card modules within a chassis of a 2U (2Unit, which indicates two units of a standard server external size) server. In the actual application scenarios, the number of expansion card module pairs can be set according to the size of the chassis. There can be two or more pairs of expansion card modules in a chassis with the size of which is greater than the size of a 2U chassis.

In the embodiment, the first expansion card modules are provided in pairs and arranged opposite to each other, and expansion cards of each pair of first expansion card modules are arranged adjacent to each other along the length direction, such that an extension part of one of two expansion cards of the first expansion card modules extends into a notch of the other one. In the way that notches and extension parts of two expansion cards are complementary, spaces occupied along the length direction and along the height direction by the two expansion cards after being combined together are reduced, and thus an upper limit of the number of expansion cards configured in a standard server chassis is increased.

The second embodiment of the application relates to a chassis module. In the embodiment, what are different from the first embodiment are that the chassis includes two accommodation spaces arranged adjacent to each other along the height direction, the accommodation spaces are cuboid spaces, two pairs of first expansion card modules are provided, and the two pair of first expansion card modules are respectively arranged within the two accommodation spaces. Description will be provided in details below in conjunction with the accompanying drawings. It should be noted that reference can be made to corresponding description of the first embodiment for the features that are the same as or correspond to those of the first embodiment, which will not be described in details below.

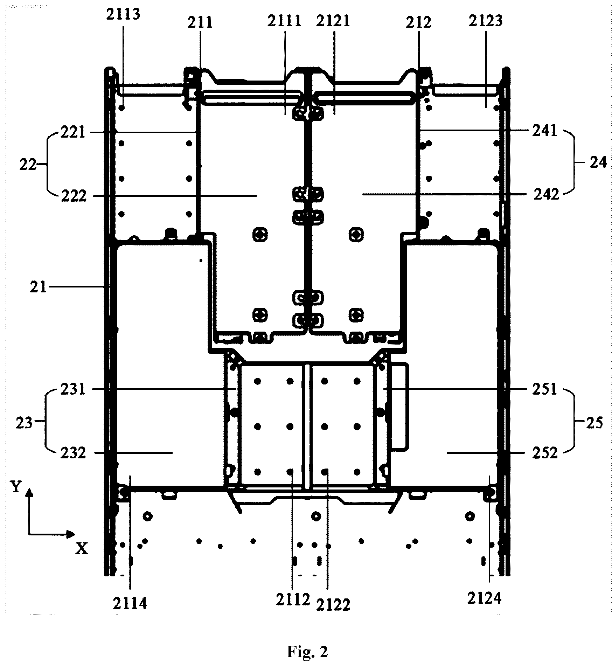

With reference to Fig. 2, the chassis module in the embodiment includes: a chassis 21, a first expansion card module 22, a first expansion card module 23, a first expansion card module 24 and a first expansion card module 25. The chassis 21 includes an accommodation space 211 and an accommodation space 212 within the chassis, where the accommodation space 211 includes a first corner 2111 and a first corner 2112, which are adjacent to the accommodation space 212, and a second corner 2113 and a second corner 2114, which are away from the accommodation space 212. The accommodation space 212 includes a first corner 2121 and a first corner 2122, which are adjacent to the accommodation space 211, and a second corner 2123 and a second corner 2124, which are away from the accommodation space 211. The first expansion card module 22 includes a first riser card 221 and a first expansion card 222. The first expansion card module 23 is arranged opposite to the first expansion card module 22, and includes a first riser card 231 and a first expansion card 232. The first expansion card module 22 and the first expansion card module 23 are arranged within the accommodation space 211 as one expansion card module pair. The first expansion card module 24 includes a first riser card 241 and a first expansion card 242. The first expansion card module 25 is arranged opposite to the first expansion card module 24. The first expansion card module 24 and the first expansion card module 25 are arranged within the accommodation space 212 as one expansion card module pair. The chassis module involved in the embodiment of the application will be described in details below in conjunction with the accompanying drawings.

In the embodiment, the chassis includes the accommodation space 211 and the accommodation space 212, which are arranged adjacent to each other along the height direction (the direction X shown in the figure). Each of the accommodation spaces is a cuboid space. Two first expansion card of each pair of first expansion card modules are diagonally arranged in the accommodation space, and one of the two first expansion cards of each pair of first expansion card modules is arranged at the first corner, and the other one is arranged at the second corner. For example, as shown in Fig. 2, the first expansion card module 22 is located at the first corner 2111 of the accommodation space 211, and the first expansion card module 23 arranged opposite to the first expansion card module 22 is located at the second corner 2114 of the accommodation space 211. The first expansion card module 24 is located at the first corner 2121 of the accommodation space 212, and the first expansion card module 25 arranged opposite to the first expansion card module 24 is located at the second corner 2124 of the accommodation space 212.

In the actual application scenario, a standard overall-height is 111.145 mm, and four overall-height PCIe expansion cards, which are horizontally placed, need to occupy the width of 444.6 mm, whereas the width of an internal accommodation space of a standard 2U server chassis is merely 438 mm. In the embodiment, four overall-height PCIe expansion cards can be horizontally (the so-called "horizontally" here refers to the direction along the plane XY as shown in Fig. 2) placed in sequence in a chassis along the height direction without changing the width of the chassis.

In one specific example, the first expansion card 222, the first expansion card 232, the first expansion card 242 and the first expansion card 252 in the implementation are all double-width (occupying the width of two standard slots) and overall-height GPU cards, and four overall-height GPU cards can be horizontally placed in sequence in a standard 2U chassis along the height direction.

Compared with the first embodiment, in this embodiment, two pairs of first expansion card modules are respectively arranged in two accommodation spaces that are arranged adjacent to each other along the height direction within a chassis. Through the arrangement in this way, four overall-height PCIe expansion cards can be placed on the same plane in a standard 2U server chassis.

The third embodiment of the application relates to a chassis module. In the embodiment, what is different from the second embodiment is that a first expansion card module located within one of two accommodation spaces of a chassis, and a first expansion card module located within the other of the two accommodation spaces are arranged in an axially symmetrical manner. Description will be provided in details below in conjunction with the accompanying drawings. It should be noted that reference can be made to corresponding description of the second embodiment for the features that are the same as or correspond to those of the second embodiment, which will not be described in details below.

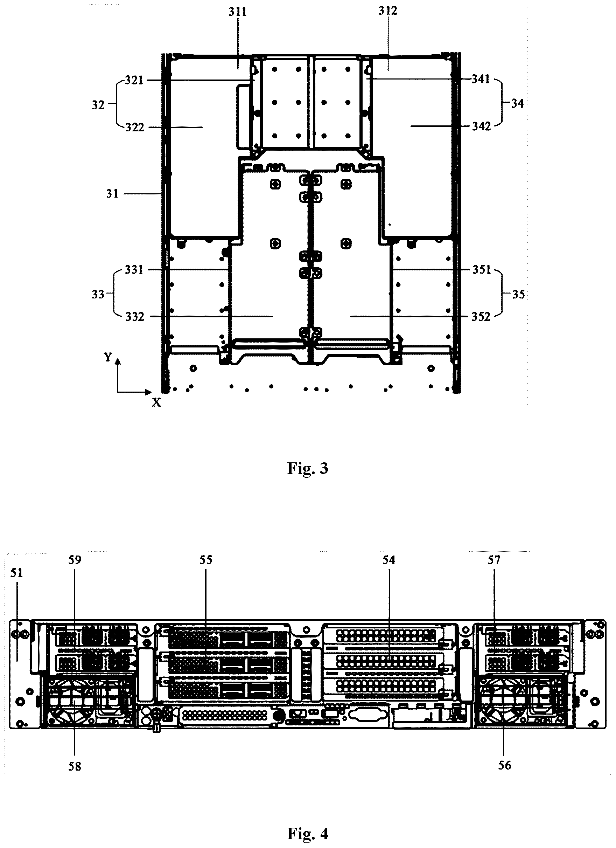

With reference to Fig. 3, the chassis module in the embodiment includes: a chassis 31, a first expansion card module 32, a first expansion card module 33, a first expansion card module 34 and a first expansion card module 35. The chassis 31 includes an accommodation space 311 and an accommodation space 312. The first expansion card module 32 includes a first expansion card 321 and a first riser card 322. The first expansion card module 33 is arranged opposite to the first expansion card module 32, and includes a first riser card 331 and a first expansion card 332. The first expansion card module 32 and the first expansion card module 33 are arranged within the accommodation space 311 as one expansion card module pair. The first expansion card module 34 includes a first riser card 341 and a first expansion card 342. The first expansion card module 35 is arranged opposite to the first expansion card module 34, and includes a first riser card 351 and a first expansion card 352. The first expansion card module 34 and the first expansion card module 35 are arranged within the accommodation space 312 as one expansion card module pair. The chassis module involved in the embodiment of the application will be described in details below in conjunction with the accompanying drawings.

In the embodiment, the first expansion card module 32 and the first expansion card module 33, which are located within the accommodation space 311, and the first expansion card module 34 and the first expansion card module 35, which are located within the accommodation space 312, are arranged in an axially symmetrical manner. Specifically, by taking the dividing line between the accommodation space 311 and the accommodation space 312 as a symmetry axis, the first expansion card module 32 and the first expansion card module 34 are arranged in the axially symmetrical manner, and the first expansion card module 33 and the first expansion card module 35 are arranged in the axially symmetrical manner.

Furthermore, the first riser card 321 and the first riser card 341 are arranged in the axially symmetrical manner, and a face of the first riser card 321 in which a slot is provided is away from a face of the first riser card 341 in which a slot is provided. The first expansion card 322 and the first expansion card 342 are axially symmetrical, the first expansion card 322 is inserted into the first riser card 321 from left to right along the direction X as shown in Fig. 3, and the first expansion card 342 is inserted into the first riser card 341 from right to left along the direction X as shown in Fig. 3. The first riser card 331 and the first riser card 351 are arranged in the axially symmetrical manner, and a face of the first riser card 331 in which a slot is provided faces a face of the first riser card 351 in which a slot is provided. The first expansion card 332 and the first expansion card 352 are axially symmetrical and abut against each other, the first expansion card 332 is inserted into the first riser card 331 along the opposite direction (from right to left) of the direction X as shown in Fig. 3, and the first expansion card 342 is inserted into the first riser card 351 along the direction X (from left to right) as shown in Fig. 3.

In the embodiment, the first expansion card 332 and the first expansion card 352 abut against each other along the height direction (the direction X as shown in the figure). Compared with the solution of "the first expansion card 332 and the first expansion card 352" being arranged spaced apart from each other, by the mutual abutting arrangement method, the first expansion card 332 and the first expansion card 352 can share a strengthening device located between the two, such that a strengthening structure and a strengthening process are simplified.

The fourth embodiment of the application relates to a chassis module. In the embodiment, what are different from the second embodiment are that the chassis module further includes a power source module, which is accommodated within a chassis and arranged at a second corner that is not occupied by a first expansion card; and a second expansion card module, which is accommodated within the chassis and is arranged adjacent to the power source module along the width direction, with the second expansion card module including a second riser card having slots and a second expansion card inserted into the second riser card by means of the slots. Description will be provided in details below in conjunction with the accompanying drawings. It should be noted that reference can be made to corresponding description of the second embodiment for the features that are the same as or correspond to those of the second embodiment, which will not be described in details below.

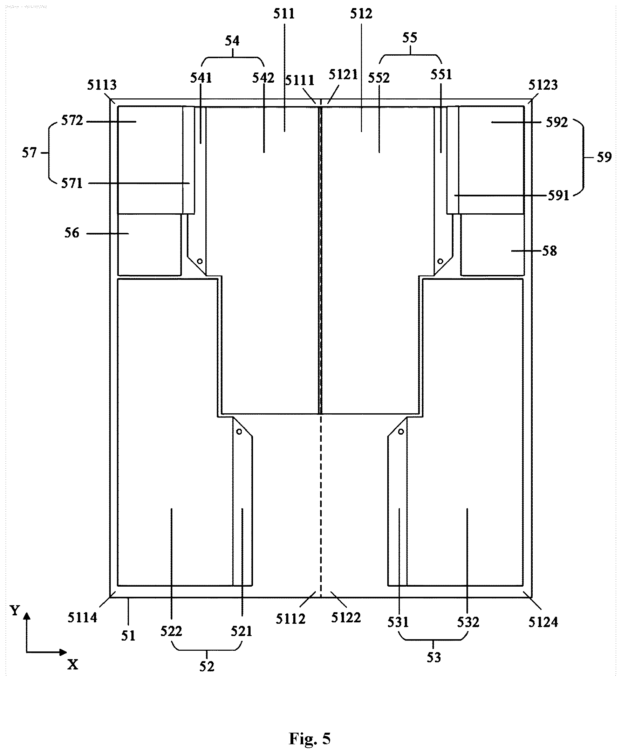

With reference to Fig. 4 and Fig. 5, the chassis module in the embodiment includes: a chassis 51, a first expansion card module 52, a first expansion card module 53, a first expansion card module 54, a first expansion card module 55, a power source module 56, a second expansion card module 57, a power source module 58 and a second expansion card module 59. The chassis 51 includes an accommodation space 511 and an accommodation space 512. The accommodation space 511 includes a first corner 5111 and a first corner 5112, which are adjacent to the accommodation space 512, and a second corner 5113 and a second corner 5114, which are away from the accommodation space 512. The accommodation space 512 includes a first corner 5151 and a first corner 5122, which are adjacent to the accommodation space 511, and a second corner 5123 and a second corner 5124, which are away from the accommodation space 511. The first expansion card module 52 includes a first riser card 521 and a first expansion card 522. The first expansion card module 54 is arranged opposite to the first expansion card module 52, and includes a first riser card 541 and a first expansion card 542. The first expansion card module 52 and the first expansion card module 54 are arranged within the accommodation space 511 as one expansion card module pair. The first expansion card module 53 includes a first riser card 531 and a first expansion card 532. The first expansion card module 55 is arranged opposite to the first expansion card module 53, and includes a first riser card 551 and a first expansion card 552. The first expansion card module 53 and the first expansion card module 55 are arranged within the accommodation space 512 as one expansion card module pair. The power source module 56 is arranged at the second corner 5113 of the accommodation space 511. The second expansion card module 57 includes a second riser card 571 and a second expansion card 572, and the second expansion card module 57 is arranged adjacent to the power source module 56 along the width direction (perpendicular to the plane direction of the paper shown in Fig. 5). The power source module 58 is arranged at the second corner 5123 of the accommodation space 512. The second expansion card module 59 includes a second riser card 591 and a second expansion card 592, and the second expansion card module is arranged adjacent to the power source module 58 along the width direction.

In the embodiment, the power source module 56 and the power source module 58 are both used for the placement of a power source of a server chassis. The power source module 56 is arranged at the first corner or the second corner (the second corner 5113 in the embodiment) of the accommodation space 511 that is not occupied by the first expansion card 522 and the first expansion card 542. The power source module 58 is arranged at the first corner or the second corner (the second corner 5123 in the embodiment) of the accommodation space 512 that is not occupied by the first expansion card 532 and the first expansion card 552.

In the embodiment, the second expansion card module 57 includes a second riser card 571 and a second expansion card 572. The second riser card 571 is provided with slots, and is arranged adjacent to the first riser card 541 along the width direction of the chassis 51. Along the width direction, the second expansion card 572 has a single-width (occupying the width of one standard slot), and along the height direction (the direction X as shown in the figure), the second expansion card 572 has a half-height (a standard half-height is 68.9 mm). Gold fingers of the second expansion card 571 are inserted into the slots that are provided in the second riser card 571, and the second expansion card 572 is located above the power source module 56 along the width direction. The structure of the second expansion card module 59 is similar to that of the second expansion card module 57, which will not be described in details below.

In an actual application scenario, both the second riser card 571 and the second riser card 591 needs to be connected to a main board inside the chassis, and the connection method can be providing gold fingers on the second riser card 571 or the second riser card 591 and inserting the gold fingers into slots in the main board, or connecting the second riser card 571 or the second riser card 591 to the main board via a cable and a connector.

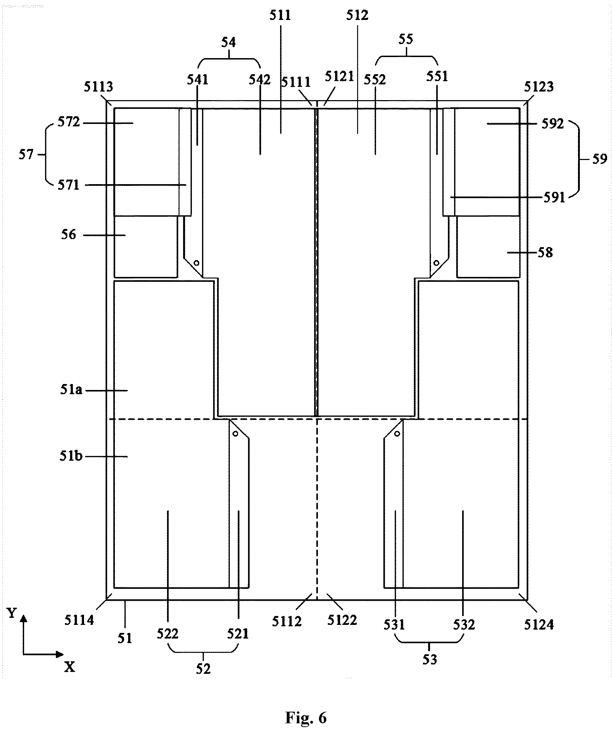

In one example, as shown in Fig. 6, the chassis 51 includes a rear frame 51a and a middle frame 51b, the first expansion card module 54 within the accommodation space 511 and the first expansion card module 55 within the accommodation space 512 are both located in the rear frame 51a, and the power source module 56, the second expansion card module 57, the power source module 58 and the second expansion card module 59 are all located in the rear frame 51a. In one example, the first riser card 541 of the first expansion card module 54 and the first riser card 551 of the first expansion card module 55 both have three expansion card slots. The second riser card 571 of the second expansion card module 57 and the second riser card 591 of the second expansion card module 59 both have two expansion card slots. Through such arrangement, 10 slots in total can be provided within the rear frame 51a of the chassis, which supports the configuration of 10 expansion cards, and increases the number of expansion cards that are supported to be configured within the rear frame of the standard server chassis.

It should be noted that the 10 slots provided within the chassis in the embodiment may be PCIe slots (supporting the configuration of a PCIe expansion card), and may also be slots of other computer expansion bus standards.

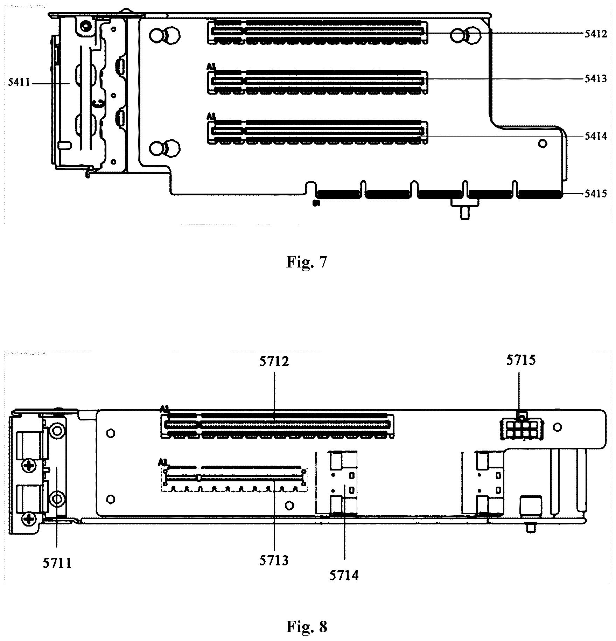

In the embodiment, the structure of the first riser card 541 is as shown in Fig. 7, and includes: a fixing member 5411, a slot 5412, a slot 5413, a slot 5414 and a gold finger 5415. The fixing member 5411 is used for fixing the first riser card 541. The slot 5412, the slot 5413 and the slot 5414 are all x16 PCIe slots. The first riser card 541 is inserted into the slots in the main board of the server via the gold finger 5415 and connected to the main board. The structure of the first riser card 551 is the same as the structure of the first riser card 541.

In the embodiment, the structure of the second riser card 571 is as shown in Fig. 8, and includes: a fixing member 5711, a slot 5712, a slot 5713, a cable interface 5714 and a cable interface 5715. The fixing member 5711 is used for fixing the second riser card 571. The slot 5712 and the slot 5713 are both PCIe slots, where the slot 5712 is a x16 PCIe slot, and the slot 5713 is a x8 PCIe slot. The second riser card 571 is connected to the main board of the server via an external lead of the cable interface 5714 or the cable interface 5715. The structure of the second riser card 592 is the same as the structure of the second riser card 571.

In one example, the first expansion card 522, the first expansion card 532, the first expansion card 542 and the first expansion card 552 are all overall-height double-width GPU cards. The first expansion card 542 and one overall-height single-width PCIe expansion card are inserted into the first riser card 541, the first expansion card 542 occupies the upper spaces of the slot 5412 and the slot 5413 of the first riser card 541, and the PCIe expansion card occupies the upper space of the slot 5414 of the first riser card. The second riser card 572 and one half-height single-width PCIe expansion card are inserted into the second riser card 571, the second expansion card 572 occupies the upper space of the slot 5712 of the second riser card 571, and the PCIe expansion card occupies the upper space of the slot 5713 of the first riser card. The number and the type of expansion cards inserted into the second riser card 592 are the same as the number and the type of expansion cards inserted into the second riser card 571. In the example, four overall-height double-width GPU cards, two overall-height single-width PCIe expansion cards and four half-height single-width PCIe expansion cards can be configured at the same time within the overall space of the rear frame and the middle frame of a standard 2U server chassis.

In another example, the first expansion card 542 and the first expansion card 552 are both overall-height single-width PCIe expansion cards, three overall-height single-width PCIe expansion cards are inserted into the first riser card 541, and respectively occupy the upper spaces of the slot 5412, the slot 5413 and the slot 5414 of the first riser card 541, and the PCIe expansion cards occupy the upper space of the slot 5414 of the first riser card. The second riser card 572 and one PCIe expansion card having a single-width along the width direction are inserted into the second riser card 571, the second expansion card 572 occupies the upper space of the slot 5712 of the second riser card 571, and the PCIe expansion card occupies the upper space of the slot 5713 of the first riser card. The number and the type of expansion cards inserted into the second riser card 592 are the same as the number and the type of expansion cards inserted into the second riser card 571. In the example, six overall-height single-width PCIe expansion cards and four half-height single-width PCIe expansion cards can be configured within the overall space of the rear frame and the middle frame of a standard 2U server chassis at the same time. It should be noted that, in the example, the first expansion card 522 and the first expansion card 532 may be overall-height single-width PCIe expansion cards or overall-height double-width PCIe expansion cards configured according to actual requirements.

It should be noted that, in the actual application scenario, the type of slots in each of the first riser cards and the second riser cards can be configured according to actual requirements, and can also be slots of other computer expansion bus standards than the PCIe slot.

It should be noted that the power source module 56, the power source module 58, the second expansion card module 57 and the second expansion card module 59 in the embodiment are all located at the rear of the chassis 51, and the rear end is one side of the rear frame that is away from the middle frame. Through such arrangement, heat dissipation of the power source placed in each power source module, and of the second expansion card in each second expansion card module can be performed through a ventilation opening at the rear of the chassis 51.

Compared with the second embodiment, in this embodiment, the power source module and the second expansion card module are arranged in a stacked manner at the first corner or the second corner, which is not occupied by the first expansion card, within each accommodation space of the chassis. When it is ensured that there is a power source accommodation space within the chassis, the number of expansion cards that can be configured within the chassis is increased by additionally providing the second expansion card module.

It should be noted that one or more embodiments are exemplarily illustrated by means of figures in corresponding accompanying drawings. The exemplary illustration does not constitute a limitation on the embodiments. Elements having the same reference signs in the accompanying drawings represent similar elements, and figures in the accompanying drawings do not constitute a proportional limitation unless otherwise specified.

Those of ordinary skills in the art can understand that the above various embodiments are particular embodiments for implementing the application, and in an actual application, can make various changes thereto in terms of form and detail, without departing from the spirit and scope of the application. Any of those skilled in the art can make respective variations and modifications without departing from the spirit and scope of the application. Therefore, the protection scope of the application shall be defined by the claims.

## Claims

1. A chassis module, comprising a chassis and a plurality of first expansion card modules provided within the chassis, the first expansion card module comprising a first riser card having a plurality of slots and a first expansion card inserted into the first riser card by means of the slots, wherein
the plurality of slots of the first riser card are sequentially arranged along the width direction of the first expansion card;
the first expansion card has an overall-height along the height direction, the first expansion card comprises a main body part having gold fingers and inserted into the slots along the height direction, and an extension part extending along the length direction from a main body part side edge, an edge of the first expansion card is provided with a notch extending along two dimensions of the length direction and the height direction; and
the plurality of first expansion card modules are provided in pairs, every two first expansion card modules in a pair are arranged opposite to each other, two first expansion cards of each pair of first expansion card modules are arranged adjacent to each other along the length direction, and the extension part of any one of the first expansion cards extends into the notch of the other first expansion card.

2. The chassis module according to claim 1, wherein along the height direction, the main body part has a main body part top edge that is away from the gold fingers; along the height direction, the extension part has an extension part top edge that is flush with the main body part top edge and an extension part bottom edge that is arranged opposite to the extension part top edge and connected to the main body part side edge; the height size of the extension part along the height direction is smaller than the size of the main body part; and the main body part side edge and the extension part bottom edge are connected to each other and together enclose the notch.

3. The chassis module according to claim 1 or 2, wherein the chassis comprises two accommodation spaces, which are arranged adjacent to each other along the height direction; the accommodation spaces are cuboid spaces; two pairs of the first expansion card modules are provided; and each of the accommodation spaces is internally provided with one pair of the first expansion card modules.

4. The chassis module according to claim 3, wherein each of the accommodation spaces comprises two first corners, which are adjacent to the other accommodation space, and two second corners, which are away from the other accommodation space; two first expansion cards of each pair of the first expansion card modules are respectively arranged at the first corner and the second corner which are diagonally arranged in the accommodation space.

5. The chassis module according to claim 4, wherein the first expansion card module within one of the two accommodation spaces, and the first expansion card module within the other of the two accommodation spaces are arranged in an axially symmetrical manner.

6. The chassis module according to claim 4, wherein the chassis module further comprises:
a power source module, the power source module being arranged at the other first corner or second corner within the accommodation space.

7. The chassis module according to claim 6, wherein the chassis module further comprises a second expansion card module, which is accommodated within the chassis and is arranged adjacent to the power source module along the width direction, with the second expansion card module comprising a second riser card having slots, and a second expansion card inserted into the second riser card by means of the slots, and the second expansion card having a half-height along the height direction.

8. The chassis module according to claim 7, wherein two power source modules and two second expansion card modules are provided; each of the accommodation spaces is provided with one power source module and one second expansion card module.

9. The chassis module according to claim 8, wherein the chassis comprises a rear frame, each of the two accommodation spaces has one first expansion card module located in the rear frame, and a first riser card of the first expansion card module located within the rear frame has three slots; and
the power source module and the second expansion card module are both located within the rear frame, and the second riser card has two slots.

10. The chassis module according to claim 9, wherein
the first expansion card is a graphics processing unit (GPU) card having a double-width along the width direction,
one first expansion card and one expansion card having a single-width along the width direction are inserted into the first riser card of each of the first expansion card modules located within the rear frame, wherein each of the first expansion cards occupies the upper spaces of two slots, and each of the expansion cards occupies the upper space of one slot; and
two expansion cards having a single-width along the width direction are inserted into each of the second riser cards, wherein each of the expansion cards occupies the upper space of one slot.

11. The chassis module according to claim 9, wherein
the first expansion card is an expansion card having a single-width along the width direction,
three first expansion cards are inserted into the first riser card of each of the first expansion card modules located within the rear frame, wherein each of the first expansion cards occupies the upper space of one slot; and
two expansion cards having a single-width along the width direction are inserted into each of the second riser cards, wherein each of the expansion cards occupies the upper space of one slot.

12. The chassis module according to claim 9, wherein the chassis comprises a middle frame, the power source module and the second expansion card module are located at a rear end of the chassis, and the rear end is one side of the rear frame that is away from the middle frame.
